# EUROPEAN PATENT APPLICATION

(11) **EP 3 786 201 A1**
(43) Date of publication of application: **03.03.2021**
(21) Application number: 19793363.3
(22) Date of filing: 29.03.2019
(51) Int. Cl.: C08F 226/06, C08F 216/14, C08F 226/10, C11D 3/37

(54) **COPOLYMER AND METHOD FOR PRODUCING SAME**

(30) Priority: 27.04.2018 JP 2018086824; 03.10.2018 JP 2018188233
(71) Applicant: Nippon Shokubai Co., Ltd., Osaka-shi, Osaka 541-0043 (JP)
(72) Inventor: ONO, Yasuhiro, Suita-shi, Osaka 564-0034 (JP); TAKECHI, Ryosuke, Suita-shi, Osaka 564-0034 (JP)
(74) Representative: Cabinet Beau de Loménie
(86) International application number: PCT/JP2019/014226
(87) International publication number: WO 2019/208111

(57) **Abstract**

The present invention provides a polymer having excellent dye transfer inhibition performance. The present invention relates to a copolymer containing a structural unit (a) derived from a N-vinyl lactam monomer (A) and a structural unit (b) derived from a monomer (B) represented by the following formula (1), (1'), or (1"). The structural unit (b) is present in a proportion of 1 to 99% by mass based on 100% by mass of all structural units.

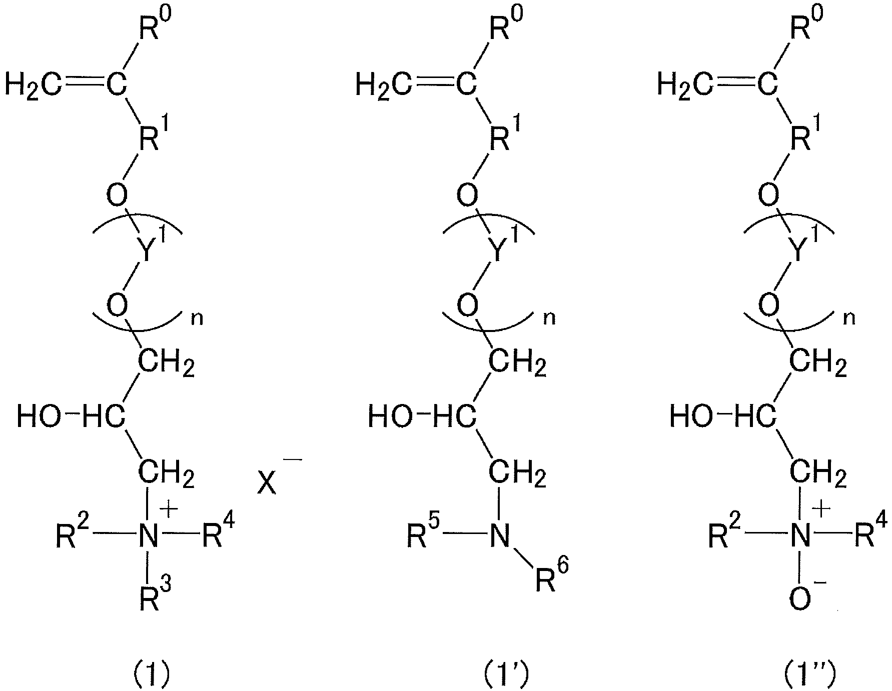

## Description

### TECHNICAL FIELD

The present invention relates to copolymers and methods of producing the copolymers. Specifically, the present invention relates to a copolymer useful for use in detergents such as dye transfer inhibitors and a method of producing the copolymer.

### BACKGROUND ART

Conventional detergents for clothes or the like contain a detergent builder (detergent aid) such as zeolite, carboxymethyl cellulose, polyethylene glycol, or a (meth)acrylic acid copolymer in order to improve the washing effects of the detergents. For example, as a polymer used as a detergent builder, Patent Literature 1 discloses an amphoteric polymer essentially containing a structural unit (a) derived from a cationic group-containing monomer (A) having a specific structure and a structural unit (b) derived from a carboxyl group-containing monomer (B), wherein the structural unit (a) is present in an amount of 1 to 99% by mass and the structural unit (b) is present in an amount of 1 to 99% by mass, based on 100% by mass of all structural units derived from all respective monomers constituting the amphoteric polymer.

When clothes or the like are washed, dyes may be leached from the clothes or the like and may stain other parts. To technically prevent such a problem, various additives such as polymers have been developed. As for such additives, for example, Patent Literature 2 discloses a copolymer obtainable by radically initiated copolymerization of a mixture of (a) from 20 to 95% by weight of 1-vinylpyrrolidone, a 1-vinylimidazole or a mixture of 1-vinylpyrrolidone and/or 1-vinylimidazoles which may contain up to 20% by weight of other monoethylenically unsaturated monomers, and (b) from 5 to 80% by weight of a water-insoluble polymer containing at least one ethylenically unsaturated double bond and/or at least one mercapto group in the molecule.

Patent Literature 3 discloses a composition containing an intermediate for water-soluble monomers containing a compound (A) having a specific structure, and the composition further contains a specific amount of a compound (B) having a specific structure.

### CITATION LIST

### - Patent Literature

Patent Literature 1: JP 2013-538877 T
Patent Literature 2: JP-H08-505166 T
Patent Literature 3: JP 2011-137135 A

### SUMMARY OF INVENTION

### - Technical Problem

As described above, Patent Literatures 2 and 3 disclose dye transfer inhibition performance of polymers produced from vinylpyrrolidone. However, since such polymers are combined with other additives when used in detergents, for example, there is room to develop more various polymers to increase the choice of the polymers as an additive showing dye transfer inhibition performance suitable for additives used in combination therewith.

The present invention has been made in view of such a current state of the art and aims to provide a polymer having excellent dye transfer inhibition performance.

### - Solution to Problem

The present inventors have conducted various studies on polymers to be used as dye transfer inhibitors and found that a copolymer obtainable by copolymerization, in a predetermined ratio, of a N-vinyl lactam monomer and a monomer having a specific structure containing an amino group, a quaternary ammonium group, or an amine oxide group has excellent dye transfer inhibition performance. Thereby, the present inventors have arrived at the solution to the above problem, completing the present invention.

That is, one aspect of the present invention relates to a copolymer containing:
a structural unit (a) derived from a N-vinyl lactam monomer (A); and
a structural unit (b) derived from a monomer (B) represented by the following formula (1), (1'), or (1"): 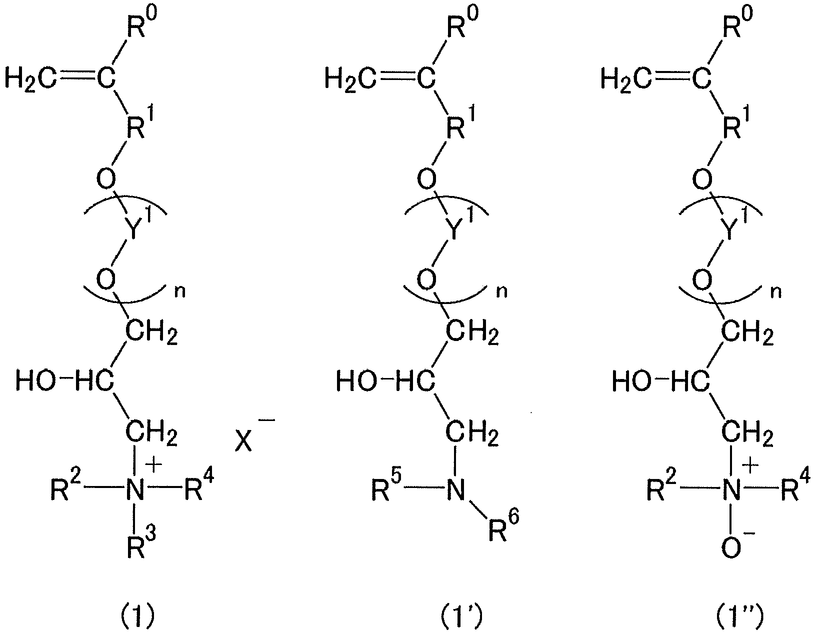
wherein R⁰ is a hydrogen atom or a CH₃ group; R¹ is a CH₂ group, a CH₂CH₂ group, or a direct bond; R², R³, and R⁴ are the same as or different from each other and are each a C1-C20 organic group, any two of the groups R² to R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; Y¹s are the same as or different from each other and are each a C2-C20 alkylene group; n is the average number of moles of oxyalkylene groups (-Y¹-O-) added, and is the number of 0 to 100; and X⁻ is a counter anion,
the structural unit (b) being present in a proportion of 1 to 99% by mass based on 100% by mass of all structural units.

Preferably, the N-vinyl lactam monomer (A) is vinylpyrrolidone.

Preferably, the structural unit (a) is present in a proportion of 50 to 99% by mass based on 100% by mass of all structural units.

Preferably, the monomer (B) is a monomer represented by the following formula (1): 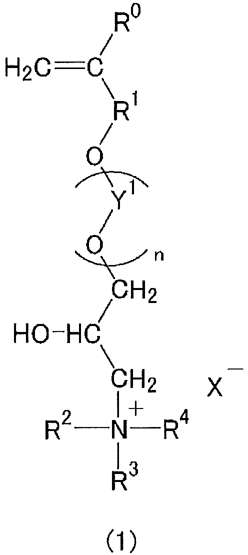 wherein R⁰ is a hydrogen atom or a CH₃ group; R¹ is a CH₂ group, a CH₂CH₂ group, or a direct bond; R², R³, and R⁴ are the same as or different from each other and are each a C1-C20 organic group, any two of the groups R² to R⁴ being optionally combined to form a cyclic structure; Y¹s are the same as or different from each other and are each a C2-C20 alkylene group; n is the average number of moles of oxyalkylene groups (-Y¹-O-) added, and is the number of 0 to 100; and X⁻ is a counter anion.

Preferably, the monomer (B) is a monomer represented by the following formula (1') or (1"): 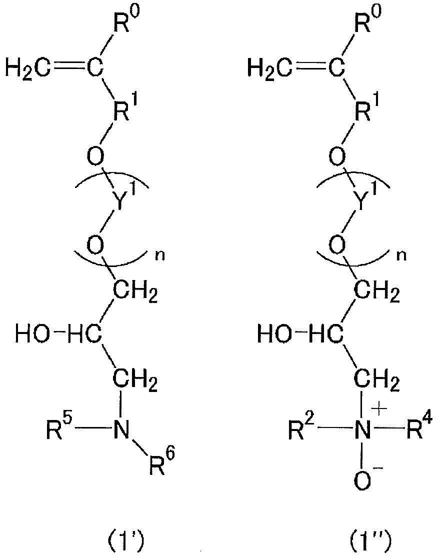 wherein R⁰ is a hydrogen atom or a CH₃ group; R¹ is a CH₂ group, a CH₂CH₂ group, or a direct bond; R² and R⁴ are the same as or different from each other and are each a C1-C20 organic group, R² and R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; Y¹s are the same as or different from each other and are each a C2-C20 alkylene group; and n is the average number of moles of oxyalkylene groups (-Y¹-O-) added, and is the number of 0 to 100.

Preferably, the proportion of a structural unit (e) derived from a monomer (E) other than the N-vinyl lactam monomer (A) and the monomer (B) is less than 10% by mass based on 100% by mass of all structural units.

Preferably, n in the formulas (1), (1'), and (1") is the number of 0 to 9.

Another aspect of the present invention relates to a dye transfer inhibitor containing the copolymer.

Still another aspect of the present invention relates to a detergent composition containing:
the copolymer; and
a detergent additive other than the copolymer.

Still another aspect of the present invention relates to a method of producing a copolymer, including:
polymerizing a monomer component containing a N-vinyl lactam monomer (A) and a monomer (B) represented by the following formula (1), (1'), or (1"): 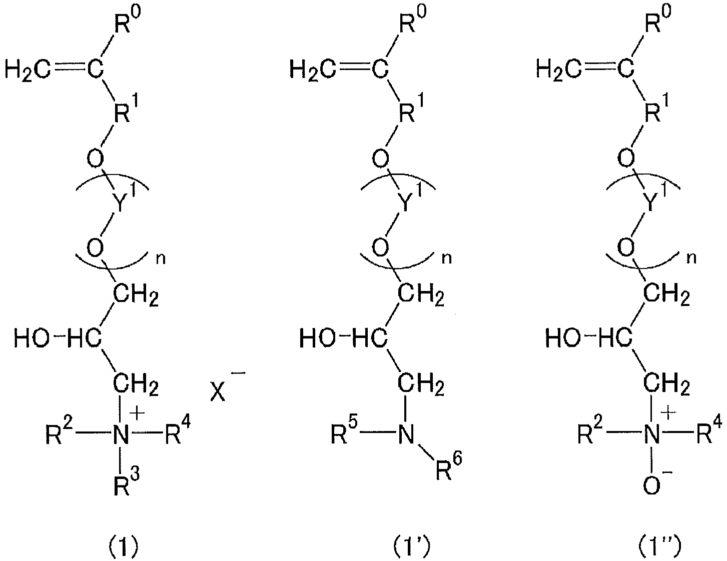 wherein R⁰ is a hydrogen atom or a CH₃ group; R¹ is a CH₂ group, a CH₂CH₂ group, or a direct bond; R², R³, and R⁴ are the same as or different from each other and are each a C1-C20 organic group, any two of the groups R² to R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; Y¹s are the same as or different from each other and are each a C2-C20 alkylene group; n is the average number of moles of oxyalkylene groups (-Y¹-O-) added, and is the number of 0 to 100; and X⁻ is a counter anion,
the monomer (B) being present in the monomer component in a proportion of 1 to 99% by mass based on 100% by mass of all monomers.

Preferably, the N-vinyl lactam monomer (A) is vinylpyrrolidone.

Preferably, the N-vinyl lactam monomer (A) is present in the monomer component in a proportion of 50 to 99% by mass based on 100% by mass of all monomers.

Preferably, the monomer (B) is a monomer represented by the following formula (1): 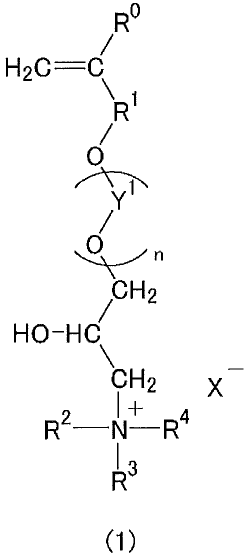 wherein R⁰ is a hydrogen atom or a CH₃ group; R¹ is a CH₂ group, a CH₂CH₂ group, or a direct bond; R², R³, and R⁴ are the same as or different from each other and are each a C1-C20 organic group, any two of the groups R² to R⁴ being optionally combined to form a cyclic structure; Y¹s are the same as or different from each other and are each a C2-C20 alkylene group; n is the average number of moles of oxyalkylene groups (-Y¹-O-) added, and is the number of 0 to 100; and X⁻ is a counter anion.

Preferably, the monomer (B) is a monomer represented by the following formula (1') or (1"): 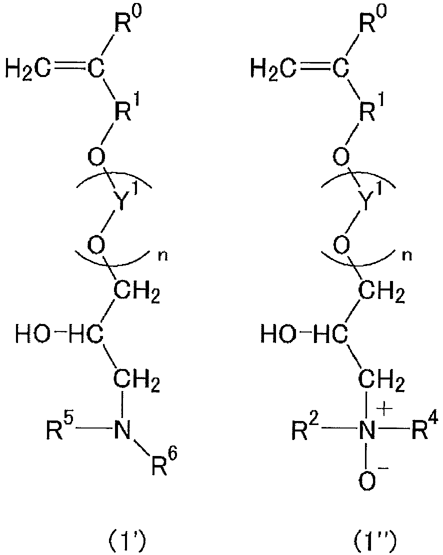 wherein R⁰ is a hydrogen atom or a CH₃ group; R¹ is a CH₂ group, a CH₂CH₂ group, or a direct bond; R² and R⁴ are the same as or different from each other and are each a C1-C20 organic group, R² and R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; Y¹s are the same as or different from each other and are each a C2-C20 alkylene group; and n is the average number of moles of oxyalkylene groups (-Y¹-O-) added, and is the number of 0 to 100.

Preferably, in the monomer component, the proportion of a monomer (E) other than the N-vinyl lactam monomer (A) and the monomer (B) is less than 10% by mass based on 100% by mass of all monomers.

Preferably, n in the formulas (1), (1'), and (1") is the number of 0 to 9.

### - Advantageous Effects of Invention

The copolymer of the present invention having the above features has excellent dye transfer inhibition performance and is thus suitable for detergents such as dye transfer inhibitors.

### DESCRIPTION OF EMBODIMENTS

The following description is offered to specifically illustrate preferred embodiments of the present invention. It should be noted that the present invention is not limited only to these embodiments, and the embodiments can be appropriately altered within the scope of the present invention. Any combination of two or more of the following preferred embodiments of the present invention is also a preferred embodiment of the present invention.

### <Copolymer>

A copolymer of the present invention contains a structural unit (a) derived from a N-vinyl lactam monomer (A) and a structural unit (b) derived from a monomer (B) represented by the formula (1), (1'), or (1"), the structural unit (b) being present in a proportion of 1 to 99% by mass based on 100% by mass of all structural units. The copolymer of the present invention having such a structure has a structure similar to that of a dye. Thus, the copolymer is considered to highly interact with the dye, to have enhanced adsorption properties, and to have excellent dye transfer inhibition performance.

The copolymer of the present invention has only to contain, as the structural unit (b), at least one structural unit selected from the group consisting of a structural unit derived from a monomer (B) represented by the formula (1), a structural unit derived from a monomer (B) represented by the formula (1'), and a structural unit derived from a monomer (B) represented by the formula (1"). In other words, the copolymer may contain one or two of these or may contain all three of these. The copolymer preferably contains the structural unit (b) derived from a monomer (B) represented by the formula (1) or (1') among the formulas (1) to (1"). More preferably, the copolymer contains the structural unit (b) derived from a monomer (B) represented by the formula (1').

The copolymer preferably contains the structural unit (a) in a proportion of 1 to 99% by mass based on 100% by mass of all structural units (the copolymer). With such a proportion, the copolymer has more enhanced dye transfer inhibition performance. The lower limit of the above range is more preferably 10% by mass, still more preferably 20% by mass, further preferably 30% by mass, further more preferably 50% by mass, particularly preferably 70% by mass. The upper limit of the above range is more preferably 98% by mass, still more preferably 97% by mass, further preferably 96% by mass, particularly preferably 95% by mass.

The copolymer preferably contains the structural unit (b) in a proportion of 2 to 90% by mass based on 100% by mass of all structural units (the copolymer). With such a proportion, the copolymer has more enhanced dye transfer inhibition performance. The lower limit of the above range is more preferably 3% by mass, still more preferably 4% by mass, particularly preferably 5% by mass. The upper limit of the above range is more preferably 80% by mass, still more preferably 70% by mass, further preferably 50% by mass, particularly preferably 30% by mass.

The copolymer may further contain a structural unit (e) derived from a monomer (E) other than the N-vinyl lactam monomer (A) and the monomer (B). The proportion of the structural unit (e) is preferably 0 to 10% by mass, more preferably less than 10% by mass, still more preferably 0 to 9% by mass, further preferably 0 to 5% by mass, still further more preferably 0 to 3% by mass, most preferably 0% by mass, based on 100% by mass of the copolymer.

In a preferred embodiment of the present invention, in the copolymer, the monomer (B) is represented by the formula (1), and the structural unit (e) is present in a proportion of less than 10% by mass based on 100% by mass of all structural units.

The copolymer preferably has a weight average molecular weight of 1,000 to 1,000,000.

With such a weight average molecular weight, the effects of the present invention can be more sufficiently achieved.

The weight average molecular weight is more preferably 2,000 to 800,000, still more preferably 3,000 to 600,000, further preferably 4,000 to 400,000, further more preferably 5,000 to 200,000, still further more preferably 5,000 to 100,000, particularly preferably 5,000 to 50,000.

The weight average molecular weight may be determined by the method described in the Examples.

### <N-Vinyl lactam monomer (A)>

The N-vinyl lactam monomer (A) may be any monomer having a cyclic N-vinyl lactam structure, and it is preferably a structure represented by the following formula (2) : 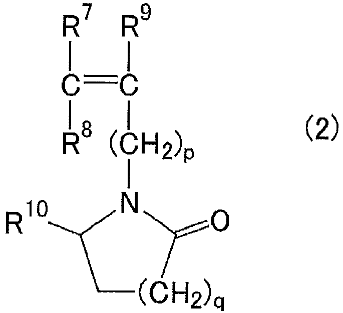 wherein R⁷, R⁸, R⁹, and R¹⁰ are the same as or different from each other and are each a hydrogen atom or an optionally substituted C1-C10 alkyl group; p is an integer of 0 to 4; and q is an integer of 1 to 3.

The number of carbon atoms of the alkyl group for R⁷ to R¹⁰ is preferably 1 to 6, more preferably 1 to 4. The alkyl group is still more preferably a methyl group or an ethyl group, particularly preferably a methyl group. Nonlimiting examples of the substituent in R⁷ to R¹⁰ include a carboxyl group, a sulfonic acid group, and esters and salts thereof, and an amino group and a hydroxy group. R⁷ to R⁹ are each preferably a hydrogen atom. R¹⁰ is preferably a hydrogen atom or a methyl group, more preferably a hydrogen atom.

Further, p is preferably an integer of 0 to 2, more preferably an integer of 0 or 1, most preferably 0.

Further, q is preferably 1 or 2, more preferably 1.

Examples of the compound represented by the formula (2) include N-vinylpyrrolidone, N-vinyl-5-methylpyrrolidone, N-vinylpiperidone, N-vinylcaprolactam, and 1-(2-propenyl)-2-pyrrolidone. One or more of these may be used. The N-vinyl lactam is preferably an unsaturated monomer having a pyrrolidone ring, more preferably N-vinylpyrrolidone.

### <Monomer (B)>

The monomer (B) is represented by the formula (1), (1'), or (1").

When R¹ in the formulas (1) to (1") is a direct bond, H₂C=C(R⁰)-R¹-O- in the formulas (1) to (1") is represented by H₂C=C(R⁰)-O-.

Here, H₂C=C(R⁰)-R¹- is a methallyl group when R⁰ is a CH₃ group and R¹ is a CH₂ group; is an isoprenyl group when R⁰ is a CH₃ group and R¹ is a CH₂CH₂ group; is an isopropenyl group when R⁰ is a CH₃ group and R¹ is a direct bond; is an allyl group when R⁰ is a hydrogen atom and R¹ is a CH₂ group; is a butenyl group when R⁰ is a hydrogen atom and R¹ is a CH₂CH₂ group; and is a vinyl group when R⁰ is a hydrogen atom and R¹ is a direct bond.

In the monomer (B), the group containing a polymerizable carbon-carbon double bond, that is, H₂C=C(R⁰)-R¹-, is preferably an isoprenyl, methallyl, allyl, or vinyl group. To enhance the stability of the polymer, it is more preferably an isoprenyl, methallyl, or allyl group, particularly preferably an allyl group.

In the formulas (1) and (1"), R², R³, and R⁴ are the same as or different from each other and are each a C1-C20 organic group, any two of the groups R² to R⁴ being optionally combined to form a cyclic structure. In the formula (1'), R⁵ and R⁶ are the same as or different from each other and are each a hydrogen atom or a C1-C20 organic group, R⁵ and R⁶ being optionally combined to form a cyclic structure. The C1-C20 organic group may be any group having 1 to 20 carbon atoms as a whole, and is preferably a hydrocarbon group such as an alkyl, aryl, or alkenyl group. The alkyl, aryl, and alkenyl groups may be unsubstituted, may be groups obtainable by replacing one or more hydrogen atoms by different organic groups, or may be groups obtainable by replacing one or more carbon atoms by different atoms. Examples of the different organic groups include alkyl (when the organic group for R², R³, or R⁴ is an alkyl group and is substituted, it corresponds to an unsubstituted alkyl group as a whole), aryl, alkenyl, alkoxy, hydroxy, acyl, ether, amide, ester, ketone, and carboxyl groups, salts of a carboxyl group, a sulfonic acid group, and salts of a sulfonic acid group. Preferred among these is an alkyl group. Examples of the different atoms include heteroatoms such as nitrogen, oxygen, sulfur, and phosphorus atoms. Preferred among these is a nitrogen atom.

The number of carbon atoms of each of R², R³, R⁴, R⁵, and R⁶ in the formulas (1) to (1") is preferably 1 to 15, more preferably 1 to 10, still more preferably 1 to 8, further preferably 1 to 6, particularly preferably 1 to 4. With the number of carbon atoms within the preferred ranges indicated above, the polymer can have more enhanced dye transfer inhibition performance. Further, since the monomer (B) with such a number of carbon atoms can be produced in high yield, the polymerizability of monomers can be enhanced and high purity polymers can be obtained.

Specific examples of R², R³, R⁴, R⁵, and R⁶ include alkyl groups such as methyl, ethyl, isopropyl, n-propyl, n-butyl, isobutyl, octyl, lauryl, stearyl, cyclohexyl, and 2-ethylhexyl groups; alkenyl groups such as butylene, octylene, and nonylene groups; aryl groups such as phenyl, benzyl, phenethyl, 2,3- or 2,4-xylyl, mesityl, and naphthyl groups; and groups, such as hydroxyethyl and hydroxypropyl groups, obtainable by replacing part of the hydrogen atoms of any of the above-listed groups by an alkoxy group, a carboxy ester group, an amino group, an amide group, a hydroxy group, a carboxyl group, a salt of a carboxyl group, a sulfonic acid group, or a salt of a sulfonic acid group. Preferred among these are alkyl and aryl groups, with methyl, ethyl, isopropyl, n-propyl, n-butyl, isobutyl, phenyl, and benzyl groups being more preferred.

Any two of the groups R² to R⁴ in the formula (1), R⁵ and R⁶ in the formula (1'), or R² and R⁴ in the formula (1") may be combined to form a cyclic structure. In this case, to obtain a stable cyclic structure, preferably, the cyclic structure formed by the nitrogen atom with any two of the groups R² to R⁴ in the formula (1), R⁵ and R⁶ in the formula (1'), or R² and R⁴ in the formula (1") is a three- to seven-membered ring. In other words, preferably, the total number of carbon atoms in any two of the groups R² to R⁴ in the formula (1) (or in R⁵ and R⁶ in the formula (1') or in R² and R⁴ in the formula (1")) is 2 to 6.

The cyclic structure may be any heterocycle containing a nitrogen atom, and may further contain a heteroatom such as a nitrogen, oxygen, sulfur, or phosphorus atom in addition to the nitrogen atom in the formulas (1) to (1"). The cyclic structure may also contain a substituent, in other words, may be a structure obtainable by replacing one or more hydrogen atoms in the cyclic structure by a different organic group. Examples of the different organic group include those described above.

The cyclic structure is preferably, for example, pyrazole, imidazole, or pyrrole, more preferably a heterocycle containing two nitrogen atoms, such as pyrazole or imidazole.

In the formulas (1) to (1"), Y¹s are the same as or different from each other and are each a C2-C20 alkylene group. To make the polymerizability of the monomer (B) better, each Y¹ is preferably a C2-C4 alkylene group, more preferably a C2-C3 alkylene group. Specifically, Y¹s are each preferably a C2-C4 alkylene group such as an ethylene, propylene, or butylene group, more preferably a C2-C3 alkylene group such as an ethylene or propylene group. One or more of the alkylene groups may be used. When two or more of the alkylene groups are used, oxyalkylene groups each represented by -Y¹-O- may be added by any addition form such as random addition, block addition, or alternating addition.

In the formulas (1) to (1"), n is the average number of moles of oxyalkylene groups (-Y¹-O-) added, and n is the number of 0 to 100, preferably the number of 0 to 80. With such an average number of moles of oxyalkylene groups, the polymer has more enhanced dye transfer inhibition performance. More preferably, n is 0 to 50, still more preferably 0 to 10, further preferably 0 to 9, particularly preferably 0 to 5, most preferably 0.

When the monomer (B) contains a quaternary nitrogen atom, a counter anion X⁻ is present near the quaternary nitrogen atom. The type of the counter anion X⁻ is preferably, but not limited to, a halide ion, an alkyl sulfate ion, or an organic acid ion. Specific examples of the halide ion include chloride, bromide, iodide, and fluoride ions. Preferred among these are chloride, bromide, and iodide ions, with a chloride ion being more preferred.

Specific examples of the alkyl sulfate ion include a methyl sulfate ion and an ethyl sulfate ion. Preferred among these is a methyl sulfate ion.

The organic acid ion is preferably an acetate ion (CH₃COO⁻) or a propionate ion (CH₃CH₂COO⁻).

Specific examples of the monomer (B) represented by the formula (1), (1'), or (1") where n is 0 include products prepared by addition reaction of an unsaturated monomer containing a C2-C8 group containing a cyclic ether and an amine compound, such as 1-allyloxy-3-dialkylamin-2-ols (e.g., 1-allyloxy-3-dimethylamin-2-ol, 1-allyloxy-3-diethylamin-2-ol, 1-allyloxy-3-dipropylamin-2-ol, and 1-allyloxy-3-dibutylamin-2-ol), 1-allyloxy-3-dialkanolamin-2-ols (e.g., 1-allyloxy-3-diethanolamin-2-ol), and 1-allyloxy-3-methylbenzylamin-2-ol; monomers prepared by adding a quaternizing agent to any of these; neutralized products prepared by neutralizing any of these with an acid such as hydrochloric acid or acetic acid; and oxides prepared by oxidizing any of these with a peroxy acid such as hydrogen peroxide, an organic peracid, persulfuric acid, or a percarboxylic acid. Preferred among these are 1-allyloxy-3-dimethylamin-2-ol and 1-allyloxy-3-diethanolamin-2-ol, neutralized products prepared by neutralizing any of these with an acid, and quaternary compounds thereof, with a quaternary compound of 1-allyloxy-3-dimethylamin-2-ol being more preferred.

Examples of the unsaturated monomer containing a C2-C8 group containing a cyclic ether include (meth)allyl glycidyl ether, isoprenyl glycidyl ether, and vinyl glycidyl ether. Preferred among these is (meth)allyl glycidyl ether, with allyl glycidyl ether being more preferred.

The amine compound may be any compound containing an amino group and reactive with the cyclic ether structure of the unsaturated monomer containing a C2-C8 group containing a cyclic ether.

The number of carbon atoms of the amine compound is preferably 1 to 24, more preferably 1 to 20, still more preferably 1 to 16, particularly preferably 1 to 10.

Examples of the amine compound include primary amines, secondary amines, and tertiary amine salts. The amine compound is preferably represented by the following formula (3) or (4) : 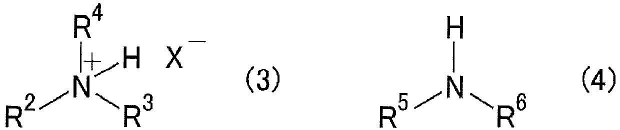 wherein R², R³, and R⁴ are the same as or different from each other and are each a C1-C20 organic group, any two of the groups R² to R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; and X⁻ is a counter anion. The amine compound is more preferably represented by the formula (4).

R² to R⁶ and X⁻ are the same as R² to R⁶ and X⁻ in the formula (1) or (1').

Examples of the primary amines and the secondary amines include C1-C24 (di)alkylamines, C1-C24 (di)alkanolamines, C1-C24 alkylalkanolamines, C1-C24 alkylarylamines, and C1-C24 cyclic amines.

Examples of the tertiary amine salts include C1-C24 trialkylamine salts and C1-C24 trialkanolamine salts.

Preferred examples of the C1-C24 (di)alkylamines include methylamine, ethylamine, propylamine, butylamine, octylamine, laurylamine, stearylamine, cyclohexylamine, 2-ethylhexylamine, dimethylamine, diethylamine, dipropylamine, dibutylamine, pentylamine, dipentylamine, hexylamine, dihexylamine, dicyclohexylamine, heptylamine, diheptylamine, octylamine, dioctylamine, dodecylamine, and didodecylamine.

Preferred examples of the C1-C24 (di)alkanolamines include methanolamine, ethanolamine, propanolamine, butanolamine, dimethanolamine, diethanolamine, dipropanolamine, dibutanolamine, and hexanolamine. Preferred examples of the C1-C24 alkyl alkanolamines include methylethanolamine.

Preferred examples of the C1-C24 alkylarylamines include methylbenzylamine and ethylbenzylamine.

Preferred examples of the C1-C24 cyclic amines include morpholine, pyrrole, pyrazole, and imidazole.

Preferred examples of the C1-C24 trialkylamine salts include trimethylamine salts and triethylamine salts.

Preferred examples of the C1-C24 trialkanolamine salts include trimethanol amine salts and triethanolamine salts.

The reaction of the unsaturated monomer containing a C2-C8 group containing a cyclic ether with the amine compound may be performed in the absence of catalysts or in the presence of an acid catalyst such as boron trifluoride or a base catalyst such as sodium hydroxide or potassium hydroxide.

The monomer (B) represented by the formula (1) where n is 1 to 100 is preferably produced by any of the methods (1) to (4) described below. These methods can produce the monomer (B) in high yield. The monomer (B) represented by the formula (1') where n is 1 to 100 is preferably produced by the steps (A) and (C) described below. The monomer (B) represented by the formula (1") where n is 1 to 100 can be produced by oxidizing the reaction product produced by the steps (A) and (C) described below with a peroxy acid such as hydrogen peroxide, an organic peracid, persulfuric acid, or a percarboxylic acid. A production method (1) includes (I) reacting epihalohydrin, an alkali compound, and a polyalkylene glycol chain-containing monomer represented by the following formula (5): 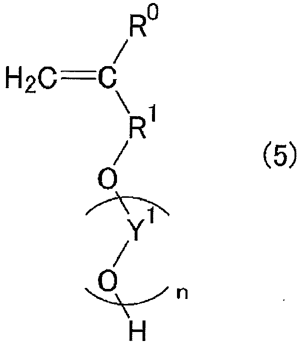 wherein R⁰ is a hydrogen atom or a CH₃ group; R¹ is a CH₂ group, a CH₂CH₂ group, or a direct bond; Y¹s are the same as or different from each other and are each a C2-C20 alkylene group; n is the average number of moles of oxyalkylene groups (-Y¹-O-) added, and is the number of 0 to 100 (step (A)) and (II) reacting the reaction product obtained in the step (A) and a tertiary amine salt (step (B)).

R⁰, R¹, Y¹, and n in the formula (5) are the same as R⁰, R¹, Y¹, and n in the formulas (1) to (1").

A production method (2) includes (I) reacting a polyalkylene glycol chain-containing monomer represented by the formula (5), epihalohydrin, and an alkali compound (step (A)), (II) reacting the reaction product obtained in the step (A) with a secondary amine (step (C)), and (III) reacting the reaction product obtained in the step (C) with a quaternizing agent (step (D)).

A production method (3) includes (I) reacting a polyalkylene glycol chain-containing monomer represented by the formula (5) and epihalohydrin in the presence of a catalyst (step (E)) and (II) reacting the reaction product obtained in the step (E) with a tertiary amine salt (step (F)).

A production method (4) includes reacting a polyalkylene glycol chain-containing monomer represented by the formula (5) with a glycidyltrialkylammonium salt (step (G)).

The polyalkylene glycol chain-containing monomer represented by the formula (5) may be one produced by adding, by a known method, an alkylene oxide to an alkylene glycol monovinyl ether, a (meth)allyl alcohol, isoprenol, or an alcohol having a structure where an alkylene oxide is added to any of these. Use of such monomers can achieve high purity of the cationic group-containing monomer (A).

Examples of the secondary amine and the tertiary amine salt used in the production methods (1) to (3) include those described as the specific examples and the preferred examples of the amine compound.

Specific examples of the epihalohydrin used in the production methods (1) to (3) include epiiodohydrin, epibromohydrin, and epiiodinehydrin. Preferred among these is epichlorohydrin because it is inexpensive industrially.

The glycidyltrialkylammonium salt used in the production method (4) is preferably represented by the following formula (6): 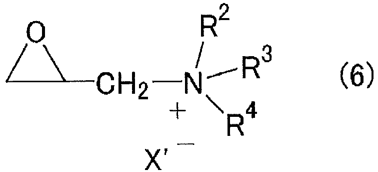 wherein R², R³, and R⁴ are the same as or different from each other and are each a hydrogen atom or a C1-C20 organic group, R² and R³ being optionally combined to form a cyclic structure; and X'⁻ is a halide ion.

R², R³, and R⁴ in the formula (6) are the same as R², R³, and R⁴ in the formula (1) .

Specific examples of the glycidyltrialkylammonium salt include glycidyltrimethylammonium chloride, glycidyltriethylammonium chloride, glycidyltrimethylammonium bromide, and glycidyltriethylammonium bromide. Preferred among these is glycidyltrimethylammonium chloride because it is easily available industrially.

The steps in the production methods (1) to (4) are represented by the following reaction schemes.

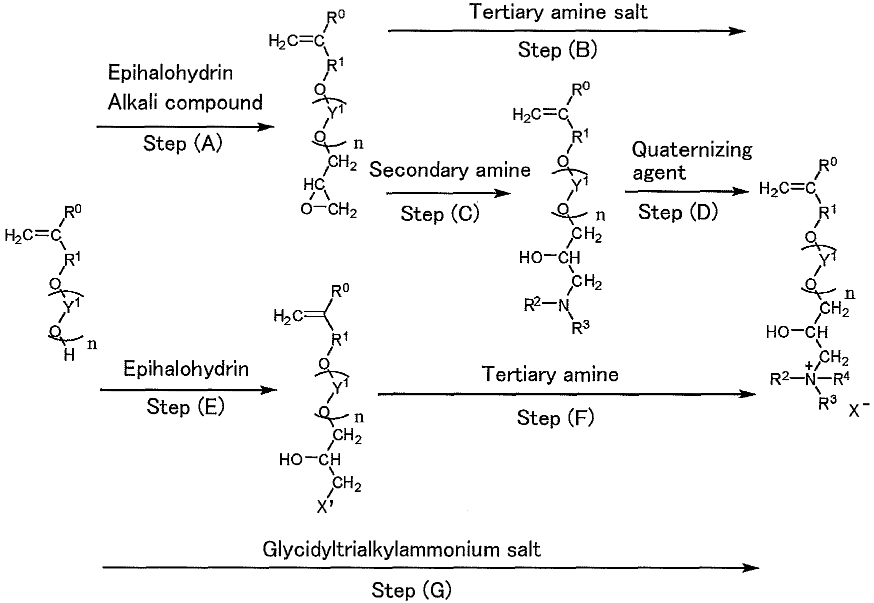

In the steps in the production methods (1) to (4), any amounts of the materials may be used and the reactions may be performed under any conditions. They may be determined by reference to the method described in Patent Literature 1.

### <Monomer (E)>

The copolymer of the present invention may further contain a structural unit (e) derived from a monomer (E) other than the vinyl lactam monomer (A) and the monomer (B).

Examples of the monomer (E) include (i) unsaturated monocarboxylic acids such as acrylic acid and methacrylic acid and salts thereof; (ii) unsaturated dicarboxylic acids such as fumaric acid, maleic acid, methylene glutaric acid, and itaconic acid and salts thereof (which may be either monovalent salts or divalent salts); (iii) unsaturated sulfonic acids such as (poly)alkylene glycol-containing unsaturated sulfonic acids (e.g., 2-(meth)allyloxyethylenesulfonic acid), 3-(meth)allyloxy-3-hydroxypropanesulfonic acid, 2-(meth)allyloxyethylenesulfonic acid, 2-acrylamido-2-methylpropanesulfonic acid, p-styrenesulfonic acid, α-methyl-p-styrenesulfonic acid, vinylsulfonic acid, vinylsulfamic acid, (meth)allylsulfonic acid, isoprenesulfonic acid, 4-(allyloxy)benzenesulfonic acid, 1-methyl-2-propene-1-sulfonic acid, 1,1-dimethyl-2-propene-1-sulfonic acid, 3-butene-1-sulfonic acid, 1-butene-3-sulfonic acid, 2-acrylamido-1-methylpropanesulfonic acid, 2-acrylamidopropanesulfonic acid, 2-acrylamido-n-butanesulfonic acid, 2-acrylamido-2-phenylpropanesulfonic acid, and 2-((meth)acryloyloxy)ethanesulfonic acid and salts thereof; (iv) hydroxyethyl (meth)acrylate, hydroxypropyl (meth)acrylate, 3-(meth)allyloxy-1,2-dihydroxypropane, unsaturated alcohols such as (meth)allyl alcohol and isoprenol, and alkylene oxide adducts thereof in which an alkylene oxide is added to a hydroxy group thereof; (v) N-substituted or unsubstituted (meth)acrylamides such as N,N-dimethylaminoethyl (meth)acrylate, (meth)acrylamide, N-monomethyl (meth)acrylamide, N-monoethyl (meth)acrylamide, and N,N-dimethyl (meth)acrylamide, and unsaturated amines such as vinyl pyridine, vinyl imidazole, salts thereof, and quaternary compounds thereof;

(vi) (meth)acrylic acid-2-ethyl sulfonate and derivatives thereof; (vii) (meth)acrylic acid esters such as methyl (meth)acrylate, ethyl (meth)acrylate, propyl (meth)acrylate, butyl (meth)acrylate, cyclohexyl (meth)acrylate, 2-ethylhexyl (meth)acrylate, n-octyl (meth)acrylate, isononyl (meth)acrylate, dodecyl (meth)acrylate, and stearyl (meth)acrylate; (viii) vinyl aryl monomers such as styrene, α-methylstyrene, vinyl toluene, indene, vinylnaphthalene, phenylmaleimide, and vinylaniline; (ix) (poly)alkylene glycol (meth)acrylates such as ethylene glycol (meth)acrylate and diethylene glycol (meth)acrylate; and (x) vinyl cyanide monomers such as acrylonitrile and methacrylonitrile. These may be used alone or in combination of two or more of them.

Examples of the salts in (i) to (iii) and (v) include metal salts, ammonium salts, and organic amine salts. Examples of the alkylene oxide in (iv) and (ix) include ethylene oxide and propylene oxide. A C1-C20 alkylene oxide is preferred, with a C1-C4 alkylene oxide being more preferred. The number of moles of alkylene oxide added is preferably 0 to 50 mol, more preferably 0 to 20 mol per mole of the compound in (iv), and is preferably 0 to 50 mol, more preferably 0 to 20 mol per mole of each compound in (ix) .

### <Method of producing copolymer>

The copolymer of the present invention may be produced by any method, and it can be produced by polymerizing a monomer component. Specific examples and preferred examples of the monomer component are those described above. The preferred proportion of each monomer is the same as the preferred proportion of the corresponding structural unit.

The present invention also encompasses a method of producing a copolymer, including polymerizing a monomer component containing a N-vinyl lactam monomer (A) and a monomer (B) represented by the formula (1), (1'), or (1"), the monomer (B) being present in the monomer component in a proportion of 1 to 99% by mass based on 100% by mass of all monomers.

In the polymerization, the polymerization of the monomer component may be started by any method, such as addition of a polymerization initiator, UV irradiation, heat application, or light irradiation in the presence of a photo initiator.

In the polymerization, a polymerization initiator is preferably used.

Preferred examples of the polymerization initiator include hydrogen peroxide; persulfates such as sodium persulfate, potassium persulfate, and ammonium persulfate; azo compounds such as dimethyl-2,2'-azobis(2-methylpropionate), 2,2'-azobis(isobutyronitrile), 2,2'-azobis(2-methylpropionamidine) dihydrochloride, 2,2'-azobis[N-(2-carboxyethyl)-2-methylpropionamidine] hydrate, 2,2'-azobis[2-(2-imidazolin-2-yl)propane], 2,2'-azobis[2-(2-imidazolin-2-yl)propane] dihydrochloride, and 2,2'-azobis(1-imino-1-pyrrolidino-2-methylpropane) dihydrochloride; organic peroxides such as benzoyl peroxide, lauroyl peroxide, peracetic acid, di-t-butyl peroxide, and cumene hydroperoxide; and redox initiators that generate radicals by combining an oxidizing agent and a reducing agent, such as a combination of ascorbic acid and hydrogen peroxide and a combination of a persulfate and a metal salt. Preferred among these polymerization initiators are hydrogen peroxide, persulfates, and azo compounds because they tend to reduce the amount of residual monomers. Most preferred are azo compounds. These polymerization initiators may be used alone, or two or more of these may be used in the form of a mixture.

The amount of the polymerization initiator(s) used is preferably 0.1 g or more and 15 g or less, more preferably 0.1 g or more and 12 g or less, still more preferably 0.1 g or more and 10 g or less per mole of the monomers used (all of the N-vinyl lactam monomer (A), the monomer (B), and the monomer (E)).

In the polymerization, a chain transfer agent may be used as necessary. Specific examples of the chain transfer agent include thiol chain transfer agents such as mercaptoethanol and mercaptopropionic acid; halides such as carbon tetrachloride and methylene chloride; secondary alcohols such as isopropyl alcohol and glycerol; hypophosphorous acid (salt) (including hydrates thereof) such as hypophosphorous acid and sodium hypophosphite; and phosphorous acid (salt) such as phosphorous acid and sodium phosphite; sulfurous acid (salt) such as sodium sulfite; bisulfurous acid (salt) such as sodium bisulfite; dithionous acid (salt) such as sodium dithionite; and metabisulfurous acid (salt) such as potassium metabisulfite. These chain transfer agents may be used alone, or two or more of these may be used in the form of a mixture.

The amount of the chain transfer agent(s) used is preferably 0 g or more and 30 g or less, more preferably 0 g or more and 15 g or less per mole of the monomer component (all monomers) used.

When a solvent is used in the polymerization, the solvent may include one or more selected from water and alcohols such as methyl alcohol, ethyl alcohol, isopropyl alcohol (2-propanol), n-butyl alcohol, and diethylene glycol. The solvent is preferably water.

Use of water as a solvent can provide a copolymer that can be used for detergents and the like without replacing the water by another solvent after the polymerization reaction.

In other words, the polymerization is preferably performed in an aqueous solution.

The amount of the solvent used is preferably 40 to 1000% by mass relative to 100% by mass of the monomer component.

The polymerization may be performed at any polymerization temperature. The polymerization temperature is preferably relatively low because a copolymer with a large molecular weight can be obtained. The polymerization temperature is more preferably 60°C to 100°C because the polymerization rate is further increased. Here, the reaction time to complete the polymerization reaction may appropriately be set depending on factors such as the reaction temperature, and the types (properties), combinations, and amounts of a monomer component, a polymerization initiator, a solvent, and the like.

### <Uses of copolymer of the present invention>

The copolymer of the present invention is preferably used for detergents such as dye transfer inhibitors, detergent additives, scale inhibitors, dispersants for various inorganic matters and organic matters, thickeners, pressure-sensitive adhesive agents, adhesive agents, surface coating agents, crosslinking agents, and moisturizers. It is more preferably used for detergents such as dye transfer inhibitors. The present invention also encompasses a method of using the copolymer of the present invention as a detergent additive such as a dye transfer inhibitor.

### <Dye transfer inhibitor>

The present invention also relates to a dye transfer inhibitor containing the copolymer of the present invention.

The copolymer of the present invention can exert the dye transfer inhibition performance against any types of dyes commonly used for dyeing clothes or the like. Examples of such dyes include direct dyes, acid dyes, basic dyes, mordant dyes, acid mordant dyes, dispersion dyes, reaction dyes, and fluorescent whitening dyes.

Preferred dyes are water-soluble dyes such as direct dyes and acid dyes. Water-soluble dyes tend to fade when washed, which enables more effective demonstration of the technical significance of the present invention.

### <Detergent composition>

The copolymer of the present invention may be used in a detergent composition (cleaning composition). In other words, the present invention also encompasses a detergent composition containing the copolymer and a detergent additive other than the copolymer.

The detergent composition is preferably used for clothes, and is preferably used as a laundry detergent, for example.

The copolymer is preferably present in the detergent composition in an amount of 0.1 to 20% by mass, more preferably 0.1 to 15% by mass, still more preferably 0.1 to 10% by mass based on 100% by mass of the detergent composition.

The detergent additive other than the copolymer of the present invention may be any surfactant or any additive commonly used in detergents. The detergent additive may be selected by appropriately referring to common knowledge in the detergent field.

The detergent composition may be a powder detergent composition or a liquid detergent composition.

The surfactant may be one or more surfactants selected from the group consisting of anionic surfactants, nonionic surfactants, cationic surfactants, and amphoteric surfactants.

Suitable examples of the anionic surfactants include alkylbenzene sulfonates, alkyl ether sulfates, alkenyl ether sulfates, alkyl sulfates, alkenyl sulfates, α-olefin sulfonates, α-sulfonated fatty acids and ester salts thereof, alkane sulfonates, saturated fatty acid salts, unsaturated fatty acid salts, alkyl ether carboxylates, alkenyl ether carboxylates, amino acid-based surfactants, N-acylamino acid-based surfactants, alkyl phosphoric acid esters and salts thereof, and alkenyl phosphoric acid esters and salts thereof. The alkyl group or alkenyl group of any of these anionic surfactants may contain an alkyl group such as a methyl group as a branch.

Suitable examples of the nonionic surfactants include polyoxyalkylene alkyl ethers, polyoxyalkylene alkenyl ethers, polyoxyethylene alkylphenyl ethers, higher fatty acid alkanolamides and adducts thereof with an alkylene oxide, sucrose fatty acid esters, alkyl glycoxides, fatty acid glycerol monoesters, and alkylamine oxides. The alkyl group or alkenyl group of any of these nonionic surfactants may contain an alkyl group such as a methyl group as a branch.

Suitable examples of the cationic surfactants include quaternary ammonium salts. Suitable examples of the amphoteric surfactants include carboxyl-type amphoteric surfactants and sulfobetaine-type amphoteric surfactants. The alkyl group or alkenyl group of any of these cationic surfactants and amphoteric surfactants may contain an alkyl group such as a methyl group as a branch.

The surfactant is typically present in a proportion of 10 to 60% by mass, preferably 15 to 50% by mass, more preferably 20 to 45% by mass, particularly preferably 25 to 40% by mass based on the whole amount of the detergent composition. A detergent composition containing too small an amount of the surfactant may fail to exhibit sufficient detergency, whereas a detergent composition containing too large an amount of the surfactant may be disadvantageous in terms of cost.

### EXAMPLES

The present invention is described in more detail below with reference to examples, but the present invention is not limited to these examples. It should be noted that the terms "part(s)" and "%" refer to "part(s) by mass" and "% by mass", respectively, unless otherwise stated.

### <Conditions for measuring weight average molecular weight (GPC) >

Apparatus: High performance GPC apparatus (HLC-8320 GPC) available from Tosoh Corporation
Detector: RI
Column: Shodex Asahipak GF-310 HQ, GF-710 HQ, and GF-1G 7B available from Showa Denko K.K.
Column temperature: 40°C
Flow rate: 0.5 mL/min
Calibration curve: polyethylene glycol, polyethylene oxide available from GL Sciences Inc.
Eluent: 0.1 N sodium acetate/acetonitrile = 3/1 (mass ratio)

### <Measurement of solid content>

A copolymer prepared by adding 3.0 g of water to 1.0 g of the copolymer was dried in an oven heated to 130°C for one hour. The solid content (%) and the volatile content (%) were calculated from the difference in mass before and after drying.

### <Evaluation of dye transfer inhibition performance>

The dye transfer inhibition performance was measured in the following way. To evaluate the dye transfer inhibition performance, first, a liquid detergent composition and a 2.0% aqueous polymer solution were prepared. The liquid detergent composition was prepared as follows: pure water was added to 11.0 g of 25% polyoxyethylene lauryl ether sodium sulfate (product name: EMAL 20C available from Kao Corporation), 2.8 g of polyoxyethylene lauryl ether (product name: EMULGEN 108 available from Kao Corporation), 17.2 g of 16% sodium dodecylbenzenesulfonate (product name: NEOPELEX G-15 available from Kao Corporation), 3 g of propylene glycol, 1.2 g of sodium oleate, and 1 g of ethanol to make 50.0 g; and the contents were stirred to prepare a liquid detergent composition. The 2.0% aqueous polymer solution was a solution having a solid concentration of 2.0% by mass prepared by diluting a polymer with an appropriate amount of water. Next, in a 500-ml beaker, 0.6 g of the liquid detergent composition prepared and 0.3 g of the 2.0% aqueous polymer solution prepared were combined with 500 g of hard water containing 50 ppm of Ca ions, followed by addition of 0.005 g of Chlorazol black and stirring of the contents. To the above-described solution was added 1 g of 5 cm × 5 cm cotton fabrics (Style 460-6 available from Testfabrics), and the contents were stirred at 25°C for 15 minutes. Thereafter, the resulting cotton fabrics were rinsed with 500 g of 50 ppm (Ca/Mg = 3/1) hard water for 15 minutes, and the same rinsing was performed once again. Thus, dyed fabrics were obtained. The dyed fabrics obtained in this process and white cotton fabrics before evaluation were analyzed with a colorimeter (spectroscopic colorimeter SE-6000 available from Nippon Denshoku Industries Co., Ltd.) to determine the WB values thereof. Thereby, the dye transfer inhibition performance of the polymer was evaluated. In the evaluation results, 0% indicates that the test fabrics have the same color intensity as fabrics treated without the polymer, and 100% indicates that the test fabrics maintain the color intensity of fabrics before evaluation. In other words, a larger value indicates higher dye transfer inhibition performance.

### <Example 1>

### (Synthesis of monomer 1)

The following describes the synthesis of a trimethylamine derivative monomer (AGE-TMA) of an allyl glycidyl ether (hereinafter, also referred to as "AGE").

A 1000-mL four-necked glass flask equipped with a reflux condenser and a stirrer (paddle blades) was charged with 104.9 g of pure water and 191.1 g of trimethylamine hydrochloride, and the contents were heated to 50°C under stirring. Subsequently, 228.3 g of AGE was added over 120 minutes, and then, reaction was performed for two hours. Thus, 80% AGE-TMA was obtained.

### (Synthesis of copolymer 1)

A 500-mL glass separable flask equipped with a reflux condenser and a stirrer (paddle blades) was charged with 141.1 g of pure water, and the contents were heated to 80°C under stirring to prepare a polymerization reaction system. Subsequently, under stirring, the following components were separately added dropwise into the polymerization reaction system maintained at 80°C through the respective nozzles: 80.0 g of N-vinylpyrrolidone (hereinafter, also referred to as "NVP"), 11.1 g of 80% AGE-TMA, and 30.8 g of 10% 2,2'-azobis(2-methylpropionamidine) dihydrochloride (hereinafter, also referred to as "10% V-50"). The dropping times of the solutions were 120 minutes for NVP, 90 minutes for 80% AGE-TMA, and 120 minutes for 10% V-50. The solutions were each added dropwise continuously at a constant rate. After completion of the dropwise addition, the reaction solution was maintained (aged) at 80°C for 120 minutes to complete the polymerization. Thus, an aqueous solution of a polymer having a solid concentration of 36% was obtained. The polymer (copolymer 1) had a weight average molecular weight of 12,300 and a dye transfer inhibition performance of 53%.

### <Example 2>

### (Synthesis of monomer 2)

The following describes the synthesis of a diethanolamine derivative monomer (AGE-DEA) of AGE.

A 1000-mL four-necked glass flask equipped with a reflux condenser and a stirrer (paddle blades) was charged with 110.7 g of pure water and 214.5 g of diethanolamine, and the contents were heated to 60°C under stirring. Subsequently, 228.3 g of AGE was added over 60 minutes, and then, reaction was performed for five hours. Thus, 80% AGE-DEA was obtained.

### (Synthesis of copolymer 2)

A 500-mL glass separable flask equipped with a reflux condenser and a stirrer (paddle blades) was charged with 141.0 g of pure water, and the contents were heated to 80°C under stirring to prepare a polymerization reaction system. Subsequently, under stirring, the following components were separately added dropwise into the polymerization reaction system maintained at 80°C through the respective nozzles: 80.0 g of NVP, 11.1 g of 80% AGE-DEA, and 30.7 g of 10% V-50. The dropping times of the solutions were 120 minutes for NVP, 90 minutes for 80% AGE-DEA, and 120 minutes for 10% V-50. The solutions were each added dropwise continuously at a constant rate. After completion of the dropwise addition, the reaction solution was maintained (aged) at 80°C for 120 minutes to complete the polymerization. Thus, an aqueous solution of a polymer having a solid concentration of 35% was obtained. The polymer (copolymer 2) had a weight average molecular weight of 22,100 and a dye transfer inhibition performance of 49%.

### <Example 3>

### (Synthesis of monomer 3)

The following describes the synthesis of a N-methylbenzylamine derivative monomer (AGE-MeBnA) of AGE.

A 200-mL four-necked glass flask equipped with a reflux condenser and a stirrer (paddle blades) was charged with 26.8 g of pure water and 42.4 g of N-methylbenzylamine, and the contents were heated to 60°C under stirring. Subsequently, 38.0 g of AGE was added over 120 minutes, and then, reaction was performed for five hours. The resulting monomer was washed with pure water and hydrochloric acid and was then subjected to extraction using ethyl acetate. Water was sufficiently removed with sodium sulfate, and the sodium sulfate was removed by filtration. Thus, 90% AGE-MeBnA was obtained.

### (Synthesis of copolymer 3)

A 500-mL glass separable flask equipped with a reflux condenser and a stirrer (paddle blades) was charged with 134.8 g of pure water, and the contents were heated to 80°C under stirring to prepare a polymerization reaction system. Subsequently, under stirring, the following components were separately added dropwise into the polymerization reaction system maintained at 80°C through the respective nozzles: 80.0 g of NVP, 4.7 g of 90% AGE-MeBnA, and 29.5 g of 10% V-50. The dropping times of the solutions were 120 minutes for NVP, 90 minutes for 90% AGE-MeBnA, and 120 minutes for 10% V-50. The solutions were each added dropwise continuously at a constant rate. After completion of the dropwise addition, the reaction solution was maintained (aged) at 80°C for 120 minutes to complete the polymerization. Thus, an aqueous solution of a polymer having a solid concentration of 35% was obtained. The polymer (copolymer 3) had a weight average molecular weight of 26,200 and a dye transfer inhibition performance of 46%.

### <Example 4>

### (Synthesis of monomer 4)

The following describes the synthesis of a pyrazole derivative monomer (AGE-Py) of AGE.

A 200-mL four-necked glass flask equipped with a reflux condenser and a stirrer (paddle blades) was charged with 16.9 g of pure water and 25.3 g of pyrazole, and the contents were heated to 80°C under stirring. Subsequently, 42.4 g of AGE was added over 10 minutes, and then, reaction was performed for two hours. Water in the resulting monomer was removed using a rotary evaporator. Thus, 100% AGE-Py was obtained.

### (Synthesis of copolymer 4)

A 300-mL glass separable flask equipped with a reflux condenser and a stirrer (paddle blades) was charged with 65.2 g of pure water, and the contents were heated to 80°C under stirring to prepare a polymerization reaction system. Subsequently, under stirring, the following components were separately added dropwise into the polymerization reaction system maintained at 80°C through the respective nozzles: 60.0 g of NVP, 20.7 g of 25% AGE-Py, and 22.7 g of 10% V-50. The dropping times of the solutions were 180 minutes for NVP, 180 minutes for 25% AGE-Py, and 180 minutes for 10% V-50. The solutions were each added dropwise continuously at a constant rate. After completion of the dropwise addition, the reaction solution was maintained (aged) at 80°C for 60 minutes to complete the polymerization. Thus, an aqueous solution of a polymer having a solid concentration of 42% was obtained. The polymer (copolymer 4) had a weight average molecular weight of 18,400 and a dye transfer inhibition performance of 48%.

### <Comparative Example 1>

The dye transfer inhibition performance was evaluated using a polyvinylpyrrolidone (PVP) powder product K-30 available from Nippon Shokubai Co., Ltd. The dye transfer inhibition performance was 37%.

### <Comparative Example 2>

### (Synthesis of copolymer 5)

A 500-mL glass separable flask equipped with a reflux condenser and a stirrer (paddle blades) was charged with 99.0 g of pure water, and the contents were heated to 80°C under stirring to prepare a polymerization reaction system. Subsequently, under stirring, the following components were separately added dropwise into the polymerization reaction system maintained at 80°C through the respective nozzles: 90.0 g of 80% acrylic acid (hereinafter, also referred to as "80% AA"), 10.1 g of 80% AGE-TMA, and 41.5 g of 10% V-50. The dropping times of the solutions were 120 minutes for 80% AA, 90 minutes for 80% AGE-TMA, and 120 minutes for 10% V-50. The solutions were each added dropwise continuously at a constant rate. After completion of the dropwise addition, the reaction solution was maintained (aged) at 80°C for 90 minutes to complete the polymerization. Thus, an aqueous solution of a polymer having a solid concentration of 35% was obtained. The polymer (copolymer 5) had a weight average molecular weight of 31,400. The weight average molecular weight of the copolymer 5 was calculated from a calibration curve prepared using polyacrylic acid standards available from Sowa Kagaku Co., Ltd. The dye transfer inhibition performance was 28%.

Table 1 shows the results of measurement of the dye transfer inhibition performances of the (co)polymers in Examples 1 to 4 and Comparative Examples 1 and 2.

**[Table 1]**

| | Polymer | Composition of monomers (mass ratio) | Dye transfer inhibition performance |
|---|---|---|---|
| Example 1 | Copolymer 1 | NVP/AGE-TMA = 90/10 | 53% |
| Example 2 | Copolymer 2 | NVP/AGE-DEA = 90/10 | 49% |
| Example 3 | Copolymer 3 | NVP/AGE-MeBnA = 95/5 | 46% |
| Example 4 | Copolymer 4 | NVP/AGE-Py = 92/8 | 48% |
| Comparative Example 1 | PVP | - | 37% |
| Comparative Example 2 | Copolymer 5 | AA/AGE-TMA = 90/10 | 28% |

## Claims

1. A copolymer comprising:
a structural unit (a) derived from a N-vinyl lactam monomer (A); and
a structural unit (b) derived from a monomer (B) represented by the following formula (1), (1'), or (1"): 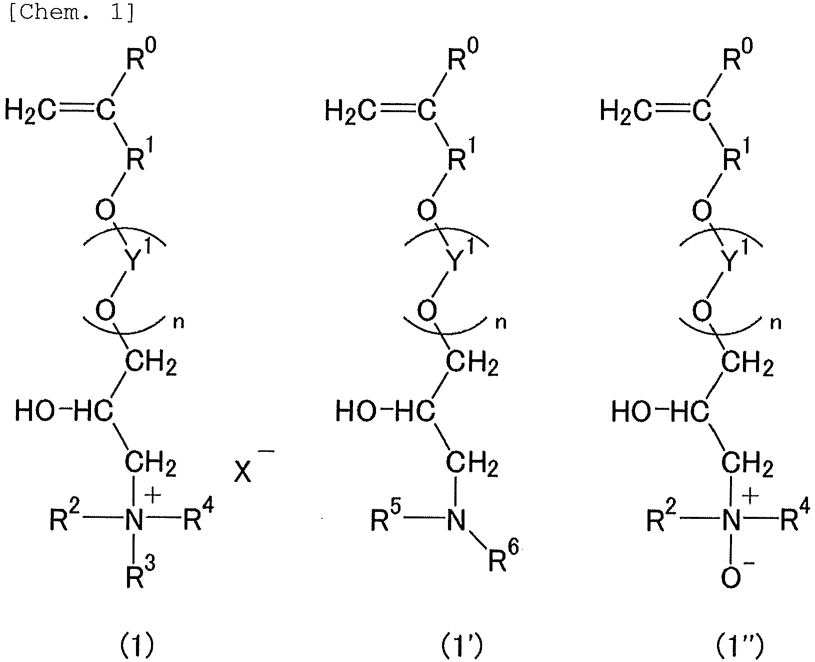 wherein R⁰ is a hydrogen atom or a CH₃ group; R¹ is a CH₂ group, a CH₂CH₂ group, or a direct bond; R², R³, and R⁴ are the same as or different from each other and are each a C1-C20 organic group, any two of the groups R² to R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; Y¹s are the same as or different from each other and are each a C2-C20 alkylene group; n is the average number of moles of oxyalkylene groups (-Y¹-O-) added, and is the number of 0 to 100; and X⁻ is a counter anion,
the structural unit (b) being present in a proportion of 1 to 99% by mass based on 100% by mass of all structural units.

2. The copolymer according to claim 1,
wherein the N-vinyl lactam monomer (A) is vinylpyrrolidone.

3. The copolymer according to claim 1 or 2,
wherein the structural unit (a) is present in a proportion of 50 to 99% by mass based on 100% by mass of all structural units.

4. The copolymer according to any one of claims 1 to 3,
wherein the monomer (B) is a monomer represented by the following formula (1): 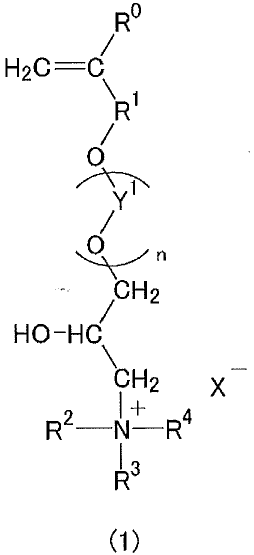 wherein R⁰ is a hydrogen atom or a CH₃ group; R¹ is a CH₂ group, a CH₂CH₂ group, or a direct bond; R², R³, and R⁴ are the same as or different from each other and are each a C1-C20 organic group, any two of the groups R² to R⁴ being optionally combined to form a cyclic structure; Y¹s are the same as or different from each other and are each a C2-C20 alkylene group; n is the average number of moles of oxyalkylene groups (-Y¹-O-) added, and is the number of 0 to 100; and X⁻ is a counter anion.

5. The copolymer according to any one of claims 1 to 4,
wherein the monomer (B) is a monomer represented by the following formula (1') or (1"): 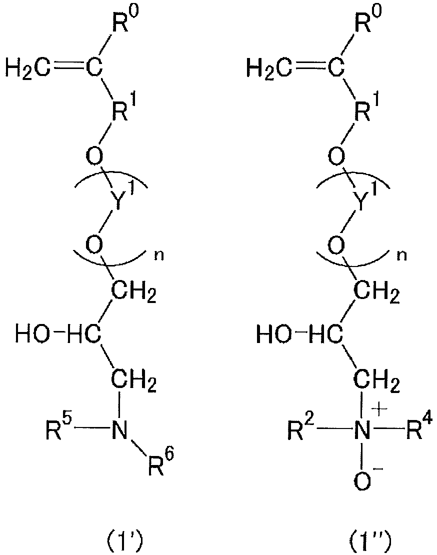 wherein R⁰ is a hydrogen atom or a CH₃ group; R¹ is a CH₂ group, a CH₂CH₂ group, or a direct bond; R² and R⁴ are the same as or different from each other and are each a C1-C20 organic group, R² and R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; Y¹s are the same as or different from each other and are each a C2-C20 alkylene group; and n is the average number of moles of oxyalkylene groups (-Y¹-O-) added, and is the number of 0 to 100.

6. The copolymer according to any one of claims 1 to 5,
wherein the proportion of a structural unit (e) derived from a monomer (E) other than the N-vinyl lactam monomer (A) and the monomer (B) is less than 10% by mass based on 100% by mass of all structural units.

7. The copolymer according to any one of claims 1 to 6,
wherein n in the formulas (1), (1'), and (1") is the number of 0 to 9.

8. A dye transfer inhibitor comprising:
the copolymer according to any one of claims 1 to 7.

9. A detergent composition comprising:
the copolymer according to any one of claims 1 to 7; and
a detergent additive other than the copolymer.

10. A method of producing a copolymer, comprising:
polymerizing a monomer component containing a N-vinyl lactam monomer (A) and a monomer (B) represented by the following formula (1), (1'), or (1"): 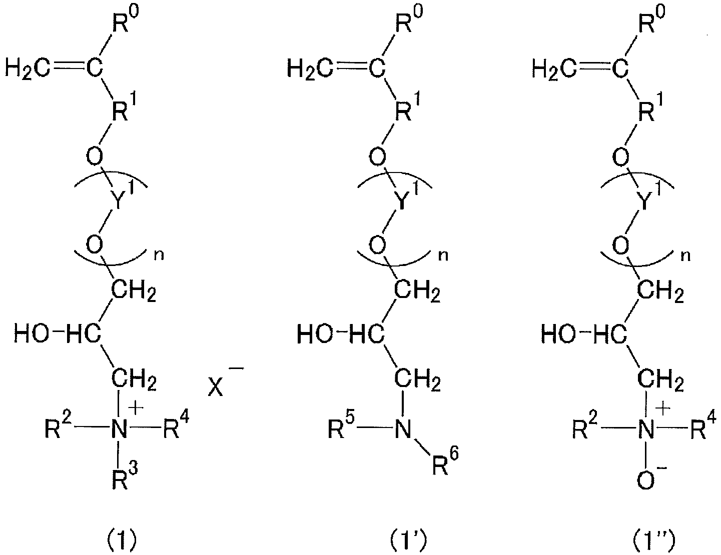 wherein R⁰ is a hydrogen atom or a CH₃ group; R¹ is a CH₂ group, a CH₂CH₂ group, or a direct bond; R², R³, and R⁴ are the same as or different from each other and are each a C1-C20 organic group, any two of the groups R² to R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; Y¹s are the same as or different from each other and are each a C2-C20 alkylene group; n is the average number of moles of oxyalkylene groups (-Y¹-O-) added, and is the number of 0 to 100; and X⁻ is a counter anion,
the monomer (B) being present in the monomer component in a proportion of 1 to 99% by mass based on 100% by mass of all monomers.

11. The method of producing a copolymer according to claim 10,
wherein the N-vinyl lactam monomer (A) is vinylpyrrolidone.

12. The method of producing a copolymer according to claim 10 or 11,
wherein the N-vinyl lactam monomer (A) is present in the monomer component in a proportion of 50 to 99% by mass based on 100% by mass of all monomers.

13. The method of producing a copolymer according to any one of claims 10 to 12,
wherein the monomer (B) is a monomer represented by the following formula (1): 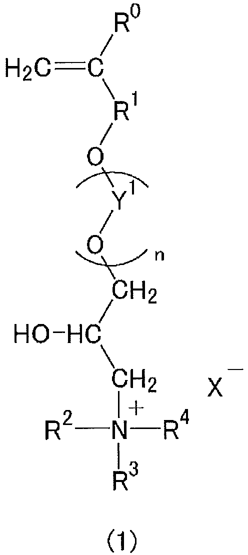 wherein R⁰ is a hydrogen atom or a CH₃ group; R¹ is a CH₂ group, a CH₂CH₂ group, or a direct bond; R², R³, and R⁴ are the same as or different from each other and are each a C1-C20 organic group, any two of the groups R² to R⁴ being optionally combined to form a cyclic structure; Y¹s are the same as or different from each other and are each a C2-C20 alkylene group; n is the average number of moles of oxyalkylene groups (-Y¹-O-) added, and is the number of 0 to 100; and X⁻ is a counter anion.

14. The method of producing a copolymer according to any one of claims 10 to 13,
wherein the monomer (B) is a monomer represented by the following formula (1') or (1"): 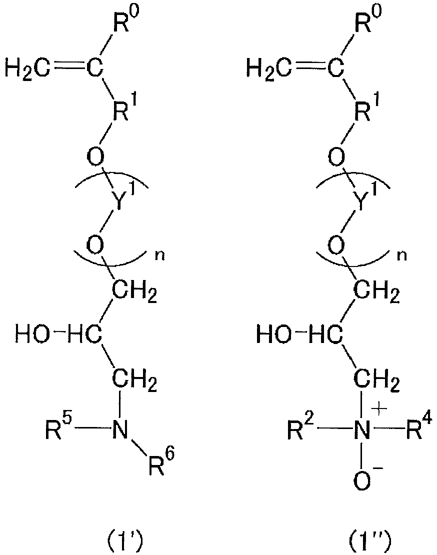 wherein R⁰ is a hydrogen atom or a CH₃ group; R¹ is a CH₂ group, a CH₂CH₂ group, or a direct bond; R² and R⁴ are the same as or different from each other and are each a C1-C20 organic group, R² and R⁴ being optionally combined to form a cyclic structure; R⁵ and R⁶ are the same as or different from each other and are each a hydrogen atom or a C1-C20 organic group, R⁵ and R⁶ being optionally combined to form a cyclic structure; Y¹s are the same as or different from each other and are each a C2-C20 alkylene group; and n is the average number of moles of oxyalkylene groups (-Y¹-O-) added, and is the number of 0 to 100.

15. The method of producing a copolymer according to any one of claims 10 to 14,
wherein in the monomer component, the proportion of a monomer (E) other than the N-vinyl lactam monomer (A) and the monomer (B) is less than 10% by mass based on 100% by mass of all monomers.

16. The method of producing a copolymer according to any one of claims 10 to 15,
wherein n in the formulas (1), (1'), and (1") is the number of 0 to 9.
